# EUROPEAN PATENT APPLICATION

(11) **EP 1 102 190 A2**
(43) Date of publication of application: **23.05.2001**
(21) Application number: 00310365.2
(22) Date of filing: 22.11.2000
(51) Int. Cl.: G06F 17/60

(54) **Computer apparatus for facilitating the creation of variable price contracts**

(30) Priority: 22.11.1999 US 166825 P; 24.02.2000 GB 0001570; 31.01.2000 GB 0002179
(71) Applicant: Applied Psychology Research Limited, London W1H 2AA (GB)
(72) Inventor: Brown, Daniel Bradley, London W1H 2AA (GB)
(74) Representative: Beresford, Keith Denis Lewis

(57) **Abstract**

A computer network is provided by comprising a plurality of remote user devices (1) and a server (3) connected via the Internet (5). Stored within the server (3) are details of a number of purchasing schemes. If a user wishes to participate within a purchasing scheme an indication of intent to participate is input via the remote user device (1) and sent via the Internet (5) to the server (3) where data representative of the relative timing of receipt of an indication of intent to participate is stored as a record. When an offer is determined to have ended the price is determined for a contract by determining the total number of indication to participate in a scheme and the relative timings at which those indications are received by the server (3).

## Description

The present application concerns computer apparatus for facilitating the creation of variable price contracts. In particular, embodiments of the present invention concern computer apparatus for facilitating the creation of variable price contracts via the Internet.

It is known to provide computer apparatus to enable individuals to take advantage of bulk buying discounts via the Internet. In such computer apparatus, a server accessible from a plurality of remote user stations is provided which enables users to record via the remote user stations an indication that they wish to purchase a particular product. Data representative of these indications of an intention to purchase a product are then stored as records within the server. When a sufficient number of individuals have registered an interest to buy a product a bulk purchase order is sent to the supplier. When goods are then received from a supplier the records within the computer apparatus are then utilized to determine which of the individual products within a bulk purchase are to be dispatched to which individuals.

Although computerized systems for enabling individuals to participate in a bulk purchasing scheme provide a means by which individuals may obtain products at a reduced price, a number of problems are not addressed by the computer apparatus of the prior art. In particular, if only a limited number of individuals register an interest in purchasing a product, then no bulk purchase can be made.

Furthermore, in known bulk purchasing systems as increasing numbers of individuals register an interest in purchasing a product, the likelihood that a bulk purchase is to be made increases. This results in there being a significant incentive for individuals to delay registering an interest until others have committed themselves to a purchase and hence acts to discourage early registration.

One way in which the systems of the prior art have addressed the problem of individuals delaying recording an interest in making a bulk purchase is to restrict orders to a preset size so that after a set number of indications of interest have been recorded within the computer apparatus an order is automatically generated. However, this approach may be unsatisfactory in that larger reductions could be available for larger bulk purchases and that by dividing a bulk purchase into preset sizes of order the probability that insufficient numbers of individuals will register an interest for the final order is increased. There is therefore a need for an alternative form of computer apparatus for registering intentions to participate in bulk purchases which overcome the problems outlined above.

In accordance with one aspect of the present invention there is provided a computer apparatus comprising means for receiving order data; and means for associating price data with said order data wherein the price associated with a received item of order data is determined on the basis of the timing of receipt of order data and the total number of items of order data received.

Thus in accordance with this aspect of the present invention a means of linking price to time of registration is provided by associating with each input indication of intention to participate, data indicative of the order in which such indications are received, and then utilizing the order data to assign different price data to indications of intention to participate received at different times. Thus for example, where later data orders are assigned price data indicative of higher prices than earlier indications of intent to participate a means is provided to encourage individuals to register their intentions to participate earlier.

In accordance with a further aspect of the present invention, there is provided a computer apparatus comprising means for receiving data indicative of an intention to participate with a bulk purchase; means for associating received indications with data indicative of the order in which said indications are received and price association means for associating with said indications price data on the basis of said order data and the total number of indications received by said receiving means.

Other aspects and embodiments of the present invention will become apparent with reference to the following drawings in which:
Figure 1 is a schematic block diagram of a computer network to which the present invention may be applied;
Figure 2 is a schematic block diagram of a data structure for a user record;
Figure 3 is a schematic block diagram for a data structure of an order record;
Figure 4 is a schematic block diagram of a data structure for an item record;
Figure 5 is a schematic block diagram of a data structure for a product record;
Figure 6 is a schematic block diagram of an entry within the price record of a product record;
Figures 7A, 7B and 7C are a flow diagram illustrating the processing of a user processing program;
Figure 8 is an illustration of an exemplary initial user interface;
Figure 9 is an illustration of an exemplary offer interface;
Figure 10 is an illustration of an exemplary order interface;
Figure 11 is an exemplary illustration of an order review interface;
Figure 12 is a flow diagram illustrating the processing of an administration module program; and
Figure 13 is an exemplary illustration of an order confirmation.

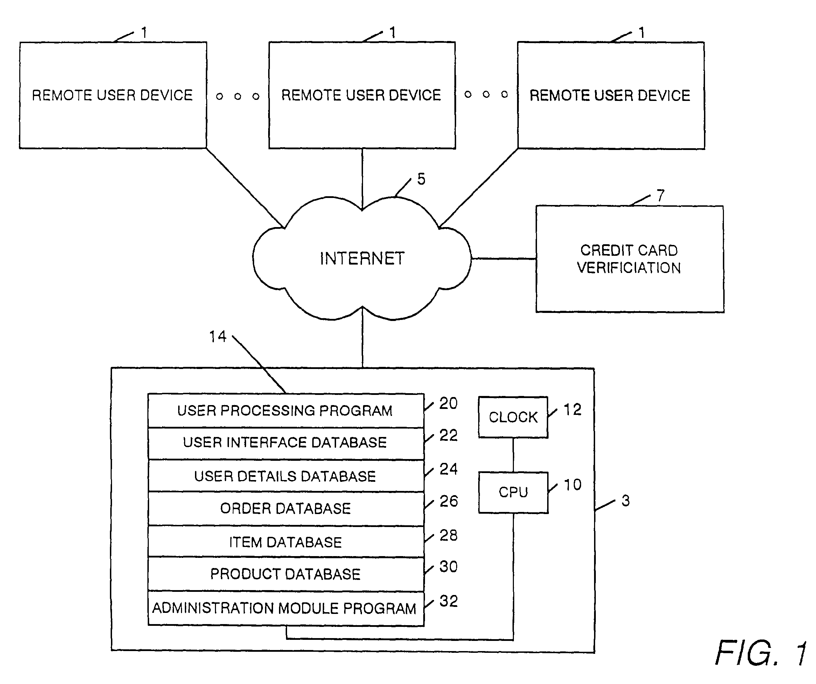

Figure 1 is a schematic block diagram of a computer network embodying the present invention. The computer network comprises a plurality of remote user devices 1 that are connected to a server 3 via the Internet 5. The server 3 is also connected to a credit card validation system 7 via the Internet 5.

The server 3 comprises a central processing unit (CPU) 10 that is connected to a clock 12 for recording the current time and data and a memory 14. Stored within the memory 14 are a user processing program 20, a user interface database 22, a user details database 24, an order database 26, an item database 28, a product database 30 and an administration module program 32 all of which will be described in detail later.

In use, initially a user connects to the server 3 via a remote user device 1 and the Internet 5. This causes the server 3 to output to the remote user device 1 user interfaces extracted from the user interface database 22 enabling a user to input data indicative of an intention to participate within a bulk purchase contract for a product. Data input into the remote user device 1 is then transmitted via the Internet 5 to the server 3. When data indicative of an intention to participate is received by the server 3 this is stored within the memory 14 together with data indicating the total number of orders received for a product and data indicating the relative times at which individual indications of intention to participate have been received.

When an offer comes to an end the administration module program 32 determines for each indication to proceed price data on the basis of the relative times in which data indicating the intention to participate has been received and the total number of such indications for involvement in a particular offer. This price data is then transmitted via the Internet 5 to both the remote user device from which an indication to participate has been received and the credit card verification system 7 to cause a credit card for the purchase to be debited.

Thus in this way, by arranging the server 3 to store both the total number of indications of intention to participate and the relative timings at which data indicative of intention to participate are received, the server 3 is therefore able to vary prices for purchases for earlier indications of intention to participate to encourage earlier registration, whilst still varying prices for later indication of intention to proceed in a manner which enables later registrants to benefit from bulk purchase discounts.

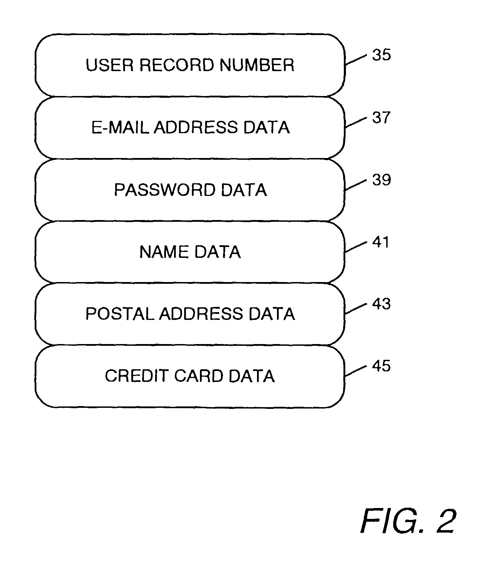

Prior to describing in detail processing of the user processing program 20 and the administration module program 32 of the server 3, data structures of the user details database 24, the order database 26, the item database 28 and the product database 30 will now be described with references to Figures 2-6.

Figure 2 is a schematic block diagram of a data structure for records within the user details database 24. Each of the records within the user details database 24 comprises a user record number 35; email address data 37 indicative of an email address to which confirmation of the final price for an order is to be despatched; password data 39 for restricting access for reviewing previously input orders; name data 41 indicative of the name for a user; postal address data 43 indicative of a despatch address for the despatch of an ordered product; and credit card data 45 comprising required data for affecting a credit card transaction.

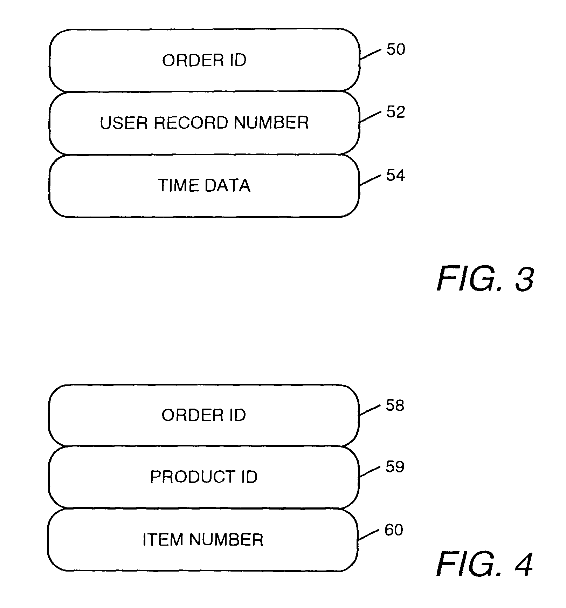

Figure 3 is a schematic block diagram of the data structure for an order record within the order database 26. An order record comprises an order ID number 50; a user record number 52 corresponding to the user record number 35 of a user record within the user details database 24 for the user to whom an order relates; and time data 54 indicative of the date and time at which the order for which the order record has been generated, was received by the server 3 from a remote user device 1.

Figure 4 is a schematic block diagram of a data structure for an item record within the item database 28. In this embodiment, an item record comprises an order identification number 58 corresponding to the order ID number 50 of the order in which an item is included; a product identification number 59 corresponding to the product identification number of the product record within the product database 30 containing data about the item; and an item number 60 indicative of the relative time in which an order for a product indicated by the item record was received by the server 3 as will be described in detail later.

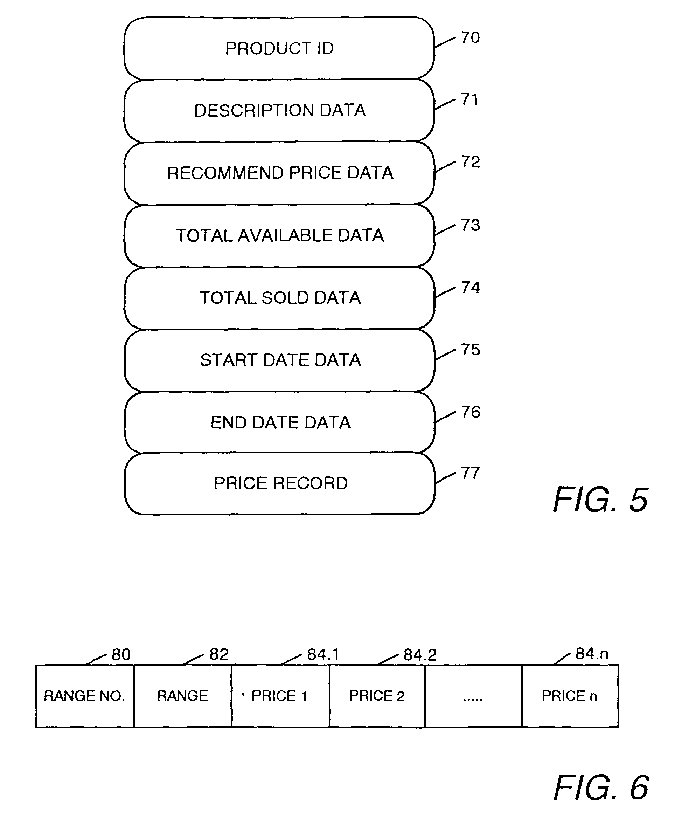

Figure 5 is a schematic block diagram of a data structure for records within the product database 30 of the server 3. Records within the product database 30 comprise a product identification number 70; description data 71 comprising in this embodiment, a name of a product; a graphic representation of a product and text data describing the product; recommended price data 72 indicating an un-discounted retail price for a product; total available data 73 indicating the total number of items of a particular product available at the start of an offer; total sold data 74 indicating the number of items of a particular product for which indications of intention to participate within a bulk buying scheme have been received by the server 3; start date data 75 indicating the time and date at which an offer is initially available; end date data 76 indicating the time and date at which an offer is to end and a price record 77.

The price record 77 of a record within the product database 30 comprises a table relating a plurality of ranges of numbers of order with different prices at which a product is to be made available for indications of interest in purchasing a product falling within that range of orders dependent upon the total number of indications of interest received in relation to that offer. Specifically the price record 77 comprises N record elements, data structure of which is illustrated in Figure 6 and comprises a range number 80; an order range 82 and N item of price data 84.1 ....84.n being either null values or prices at which a product is to be sold.

Table 1 is an illustrative example of a complete price record comprising four record elements.

**TABLE 1**

| Range No | Range | Price Data | | | |
|---|---|---|---|---|---|
| 1 | 1-5 | £300 | £280 | £240 | £210 |
| 2 | 6-10 | - | £290 | £260 | £230 |
| 3 | 11-20 | - | - | £270 | £260 |
| 4 | 21-30 | - | - | - | £265 |

As can be seen from Table 1 in this example, which comprises four record elements, range 1 which is associated with the indications of interest 1 to 5 is associated with price data comprises £300, £280, £240, and £210. As will be discussed in detail later the price records 77 in this format enables a price to be determined for any particular indication of interest in an offer on the basis of the item number 60 associated with the item within an order and the total number of items sold 74 associated with the product record within the product record for the product with a product ID 70 corresponding to the product ID 59 within the item record. This is achieved as items of price data 84 may be selected by determining a record element from which price data 84 is to be extracted by comprising the item number 60 for an indication of interest with the range data 82 for an element. Individual price data 84 may then be selected from the record element by determining in which range 82 the total number of items sold 74 for the product falls and then utilizing the associated range number to select the corresponding element of price data 84 for that range. The processing to achieve this selection of price data will be described in detail later.

Thus for example in the illustrative price record shown in Table 1 for indication of interest associated with orders 1-5 if the total number of items sold 74 falls within the range of 1-5 the price selected using the price record 77 of Table 1 would be £300. Whereas if the total number of items sold is 6-10 this price falls to £280.

As will be appreciated from the above example in Table 1 it can be seen that in this example the price data associated with the range of indications of interest falls as the number of total items sold increases. Similarly for the ranges associated with higher range numbers it will be noted that for each of these ranges the price associated with a higher range is higher than the price data associated with a lower range for the same number of total items sold. By arranging price data within a price record in this manner, as the total number of items sold increases price data associated with a particular indication of intent to purchase will fall. However, the earlier received indications of interest will become associated with prices lower than the later indications of interest. Thus in this way greater discounts are associated with those indications of interest received earlier, and hence an incentive is provided for individuals to enter an indication of interest as early as possible.

It will be appreciated that in order to establish the individual prices within a price record which will enable a profit to be made from the sale of items at that price a price data within the price record 77 will have to be set in relation to a whole sale price at which products may be purchased and for which bulk buying discounts may be available. Thus for example, in consideration of the price data shown in Table 1 if the wholesale price for purchasing items were to be as follows:

**TABLE 2**

| NUMBER ORDERED | WHOLESALE PRICE |
|---|---|
| 1-10 | £240 |
| 11-20 | £230 |
| 21-30 | £220 |

The potential profits made from selling items at the prices indicated in Table 1 would be:

**TABLE 3**

| NUMBER SOLD | WHOLESALE PRICE | AVE SALE PRICE | PROFIT PER ITEM | PROFIT |
|---|---|---|---|---|
| 5 | £240 | £300 | £60 | £300 |
| 10 | £240 | £285 | £45 | £450 |
| 15 | £230 | £256 | £27 | £405 |
| 20 | £230 | £260 | £30 | £600 |
| 25 | £220 | £245 | £25 | £625 |
| 30 | £220 | £248 | £28 | £840 |

As will be appreciated for the prices in Table 1 for the first five indications of interest received when 21 to 30 items are sold the products sent to the first five interested individuals are charged at £210 however they are being purchased at a cost of £220 which indicates that such items are being sold at a loss. However, as large numbers of products are being sold, the losses on these items are then absorbed by spreading such loss across the prices charged to other individuals. In general in order for a profit to be made it is sufficient that the average price of products sold when M items are sold does not fall below the average wholesale price for buying M items.

It will also be appreciated that although a bulk discount in this example arises when more than 11 items are sold, the saving resulting from this bulk purchase discount is not spread equally amongst all of the offers with the prices charged to individuals indicating an interest in the offer later being charged more than those who indicate an interest in the offer earlier.

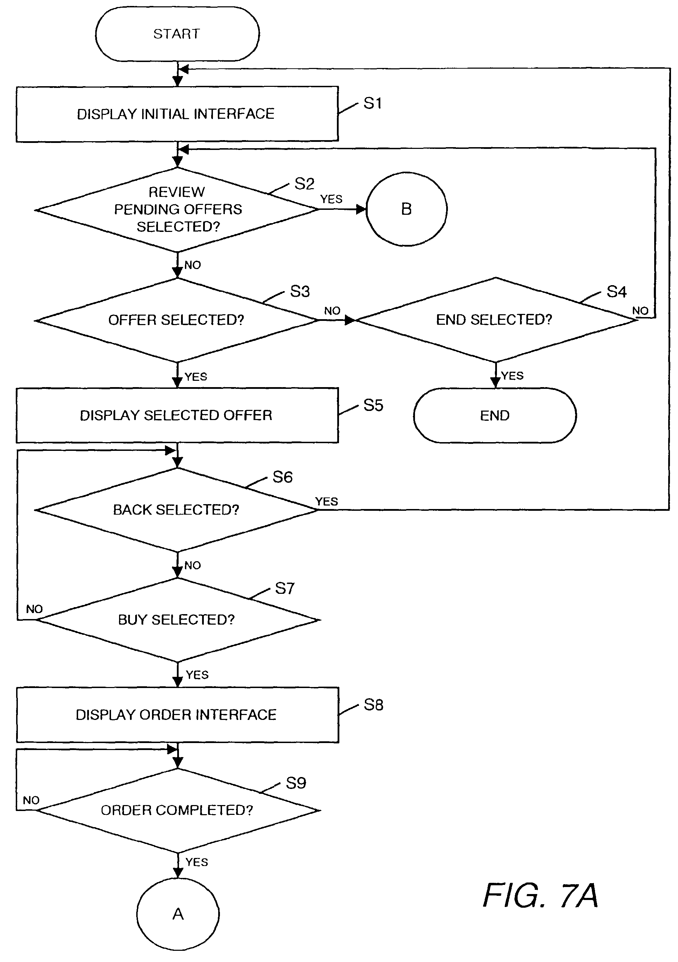

The processing of the user processing program 20 will now be described with reference to Figures 7A, B and C and Figures 8, 9, 10 and 11.

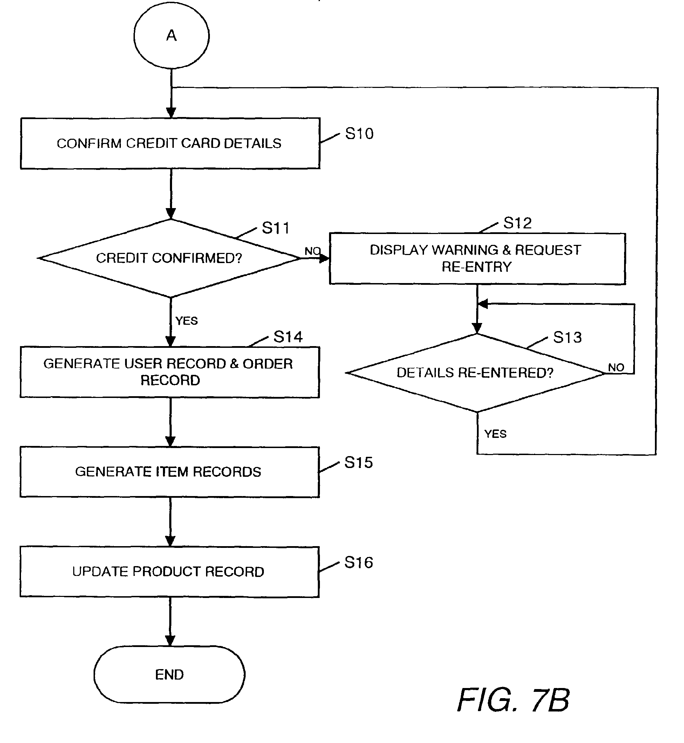

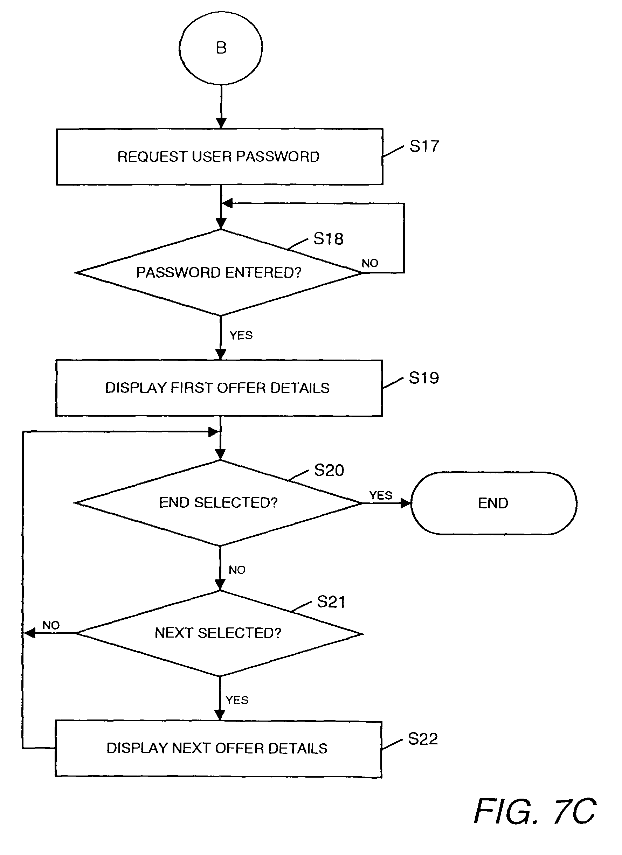

Figures 7A, 7B and 7C are a flow diagram of the processing of the user processing program 20. Initially (S1) when a remote user device 1 connects to the server 3 via the Internet 5 the user processing program 20 selects from the user interface database 22 an initial user interface into which is incorporated a list of current offers generated utilising the records within the product database 30. In this embodiment the list incorporated within the initial user interface is generated by the user processing program 20 causing the CPU 10 to select from the product database items of description data 70 for the names of products for records within the product database 30. These records are selected where the CPU 10 determines that the time and date indicated by the clock 12 falls between the start date data 75 and the end date data 76 for that product record and the total sold data 74 for that product record is determined by the CPU 10 not to exceed the total available data 73 for that record.

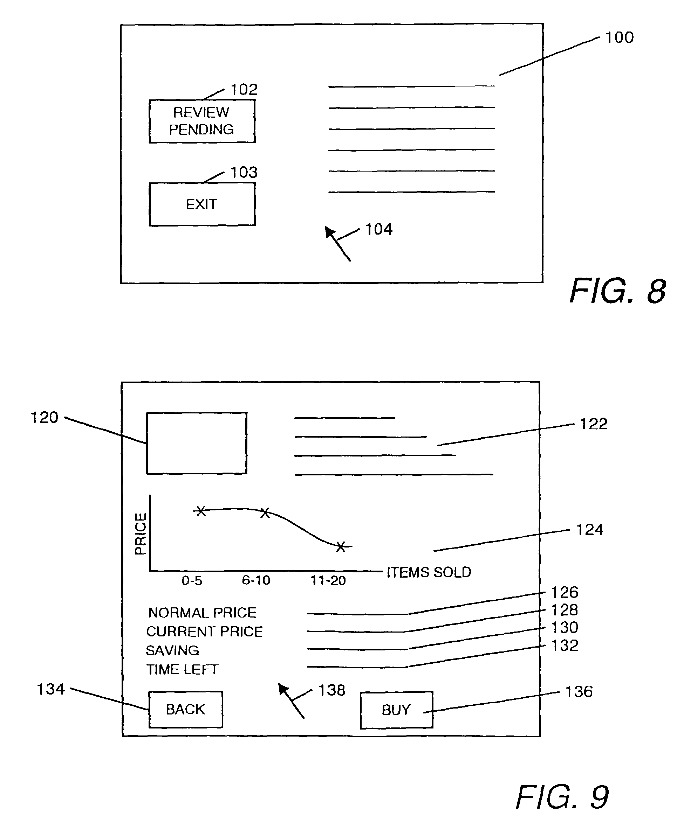

Figure 8 is an illustrative example of an initial user interface generated by the user processing program 20 and displayed on a remote user device 1. This illustrative example comprises a list 100 of available product offers; a review pending offers button 102, an exit button 103 and a pointer 104.

A user can then input via the remote user device 1 a selection of either one of the items within the list of products 100 or the review pending offers button 106 or the exit button 103 by moving a mouse or other user input device to cause the pointer 104 to be shown to move on the display and then clicking on the mouse to select either an item on the list 100, the review pending offers button 102 or the exit button 103.

When a selection is made via the remote user device 1 utilising the pointer 104, data indicating the selection is transmitted from the user device 1 via the Internet 5 to the server 3. The user processing program 20 then (S2) determines whether the data received via the Internet 5 is indicative of the selection of the review pending offers button 102 in the initial interface. If the review pending offers button has been selected using the remote user device 1 the user processing program 20 causes displays to be despatched to the remote user device 1 to enable a user to review the status of pending offers for which a user has previously submitted an indication of intent to participate with as will be described in detail later.

If the user processing program 20 determines that data received via the Internet 5 is not indicative of the selection of the review pending offers 102, the user processing program 20 then causes the CPU 10 to determine (S3) whether data received is indicative of the selection of one of the offers displayed in the list of offers 100 in the initial interface. If the CPU 10 determines that data received is not indicative of the selection of one of the offers within the list of offers 100, the user processing program 20 then causes the CPU 10 to determine (S4) whether the data received via the Internet 5 is indicative of the selection of the exit button 103, and if this is determined to be the case halt the processing of the program. If the CPU 10 determines (S4) that data received is not indicative of the selection of the exit button 103 the user processing program 20 then causes the CPU 10 to repeat its determination of whether data received is either indicative of the selection of the review pending offers button 102 or the selection of one of the offers within the list of offers 100 (S2-S3).

When the CPU 10 determines (S3) that an offer has been selected from the list of offers 100, the user processing program 20 causes (S5) the CPU 10 to generate and despatch to the remote user device 1 from which a selection of a product from a list of products 100 has been made, an offer interface displaying details about the offer utilising data within the user interface database 22 and the product record within the product database 30 corresponding to the offer selected from the list of offers 100.

Figure 9 is an illustrative example of an offer interface displayed on a remote user device 1. The illustrative example of Figure 9 comprises at the top of the screen a picture 120 and description 122 of a product which is the subject of the offer generated utilising the description data 71 of the product record corresponding to the selected product. Below the picture 120 and the description 122 appears a graph 124 illustrating the manner in which an offer price for the product will vary dependent upon the total number of items sold.

In this embodiment the graph 124 is generated utilising the total sold data 74 and price record 77 from the product record within the product database 30 corresponding to a selected product. The graph is generated by the user processing program 20 causing the CPU 10 to determine which of the order ranges 82 within the elements of the price record 77 the next indication of intent to participate within a bulk purchase contract would fall, by determining which order range 82 of offers the offer after the value of total sold data 74 would fall, and then causing a graph 124 to be displayed utilising the price data for the next available offer where the price indicated by the Y axis on the graph corresponds to the items of price data 84 within the price record element corresponding to the range, and the ranges of items to be sold along the X axis corresponding to the ranges of orders 82 for the current record element and subsequent record elements for which the range number 80 is greater than the current range.

Beneath the graph 124 of the manner in which price will vary if further orders are received, is displayed a normal price 126 corresponding to the recommended price data 72 of the product record of the selected offer; a current price 128 corresponding to the first non-NUL item of price data within the price record element within whose range 82 the order after current total sold data 74 lies; a saving 130 being a calculated value of the difference between the normal price 126 and the current price 128; and a time left 132 being a determined value for the difference between the time and date indicated by the clock 12 and the end date data 76 for the selected product. Also displayed as part of the product display are a back button 134, a buy button 136 and a pointer 138.

A user can then select using the remote user device 1 either the back button 134 or the buy button 136 by causing the pointer 138 to be varied within the display by moving a mouse or other input device and then making the selection by clicking on that mouse or other input device.

When a user has made a selection via a remote user device 1, data indicating the selection made is then despatched via the Internet 5 to the server 3. When data is received by the server 3 the user processing program 20 initially (S6) determines whether the data received is indicative of the selection of the back button 134. If the user processing program 20 determines that the back button 134 has been selected this causes the user processing program 20 to regenerate and display the initial user interface (S1) and await the input of further user selection (S2-S4).

If the user processing program 20 determines that the data received is not indicative of the selection of the back button 134 the user processing program 20 causes (S7) the CPU 10 to determine whether data received is indicative of a user selection of the buy button 136. If the CPU 10 does not determine that data received is indicative of the selection of the buy button 136 the user processing program 20 then causes the CPU 10 to await the receipt of further data and then repeats its determination of whether the back 134 or buy 136 buttons have been selected (S6-S7).

When the CPU 10 does determine (S7) that data received is indicative of the selection of the buy button 136 the user processing program 20 then causes (S8) the CPU 10 to generate and despatch to a remote user device 1 via the Internet 5 an order interface selected from the user interface database 22.

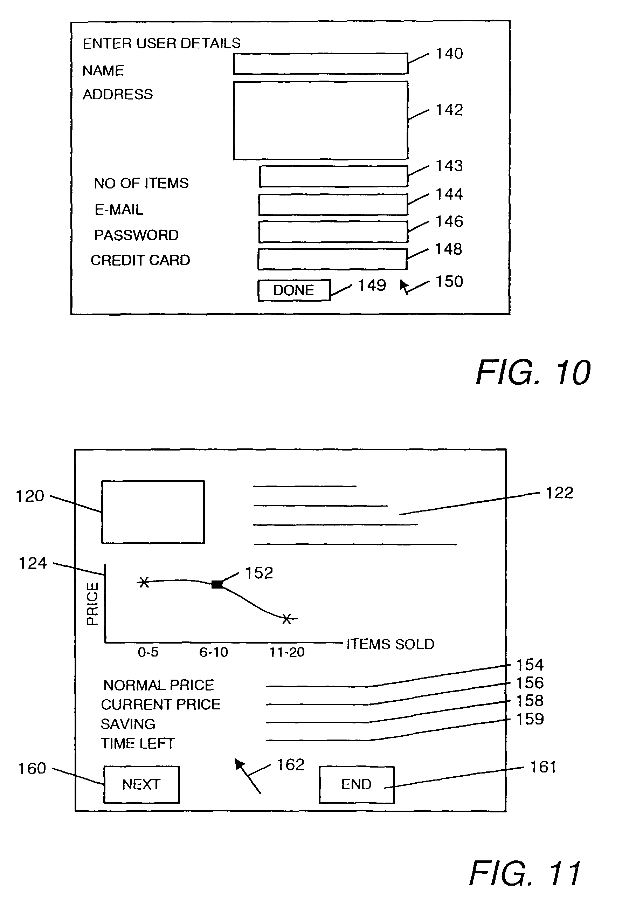

Figure 10 is an illustrative example of an order interface display on a remote user device 1. The order interface in accordance with this embodiment of the present invention comprises a name window 140, an address window 142, a number of items requested window 143, an email window 144, a password window 146, a credit card details window 148, a done button 149 and a pointer 150.

When an order interface is displayed on a remote user device 1 the user can input data via the remote user device by causing the remote user device 1 to cause the pointer 150 to select any of the windows 140-148 and then type in data which is caused to be displayed within the windows 140-148 which is selected. When data has been entered in all of the windows a user can then select the done button 149 using the pointer 150 which causes the data displayed within the windows 140-148 to be despatched to the server 3 via the Internet 5.

After an order interface has been despatched to a remote user device 1 the user processing program 20 causes the CPU 10 to await (S9) the receipt of a completed order. When a completed order has been received the user processing program 20 then causes (S10) the CPU 10 to despatch to the credit card validation system 7 via the Internet 5 a message requesting validation of the credit card details entered within the credit card window 148 of the order interface.

The user processing program 20 then causes the CPU 10 to wait until confirmation of the validity of the credit card details has been received from the credit card verification system 7 via the Internet 5. When data relating to the validity of a credit card has been received from the credit card verification system 7, the user processing program 20 causes the CPU 10 to determine whether the data received indicates that the credit card details are valid (S11). If the CPU 10 determines that these details do not indicate that the credit card is valid the CPU 10 despatches (S12) to the remote user device 1 a warning that the entered credit card details are not valid and requests that a user re-enter the credit card details. The user processing program 20 then causes the server 3 to wait (S13) until data indicative of re-entered credit card details has been received from the remote user device 1 via the Internet 5. When re-entered details have been received the user processing program 20 then (S10-S11) sends these details to the credit card verification system 7 so that the validity of the re-entered details may be confirmed.

When the user processing program 20 has confirmed (S10-S11) that credit card details entered via the remote user device 1 are valid the user processing program 20 causes (S14) the CPU 10 to generate a new user record and a new order record within the user details database 24 and the order database 26 respectively. These records are generated by the CPU 10 creating a new user details record where the user record number 35 corresponds to the next available user record number, the email address data 37 corresponds to the email address entered into the email window 144 of the order interface, the password data 39 corresponds to the password entered into the password window 146 of the order interface; the name data 41 corresponds to the data entered into the name window 140 of the order interface; the postal address data 43 corresponds to the address entered into the address window 142 and credit card data 45 corresponding to the credit card data entered in the credit card window 148 of the order interface. An order record is then generated comprising the next available order identification number 50, a user record number 52 corresponding to the user record number 35 for the newly generated user record and time data 54 corresponding to the current time indicated by the clock 12.

The user processing program 20 then (S15) generates one or more item records corresponding to the number of items indicated within the number of items window 143 of the order input interface. These item records are generated by initially creating an item record where the order identification number 58 corresponds to the order identification number 50 of the newly generated order record and a product identification number 59 corresponding to the selected product selected using the initial interface and an item number corresponding to the total sold data 74 for the selected product to which is added a counter that is initially set at one. This counter is then compared with the number of items indicated as being requested in the number of items window 143 of the order interface and if the counter is not equal to the number of items indicated within the window 143 the counter is incremented and a further item record generated utilising this new value of the counter. Thus in this way a number of item records are generated corresponding to the number of items requested using the order interface where the item number 60 associated with each of the item records differs by one.

When all the necessary item records have been generated and stored within the item database 28 the user processing program 20 then (S16) causes the total sold data 74 of the selected product record to be increased by a value indicated by the number entered in the number of items window 143 of the order database to cause the product record for the selected product to reflect the fact that the total number of indications or intent to proceed with a bulk purchase of the product is now increased by that figure. The processing of the user processing program 20 then comes to an end.

As discussed above, after an initial interface (S1) is despatched and displayed on a remote user device, the processing program 20 awaits receipt of data from the remote user device 1 indicating whether a user has selected a product from the displayed list of products 100, a review pending offers button 102 or an exit button 103. If the CPU determines (S2) that data received is indicative of the user selecting the review pending offers button, this causes (S17) the user processing program 20 to cause the CPU 10 to select from the user interface database 22 a user interface requesting a user input a user password and email address which is then despatched to the remote user device 1 from where a selection had been made.

The user processing program 20 then (S18) awaits for receipt of data from his remote user device 1 indicating an input email address and password when an email address and password have been received from a remote user device 1 via the Internet 5. The user processing program 20 then causes the CPU 10 to determine which of the user records within the user details database 24 contains email address data 27 and password data 39 corresponding to the received email address data and password data. The user processing program 20 then causes the CPU 10 to generate a list of order identification numbers of order records for which the user record number 52 corresponds to the user record number 35 of the user record for which the email address data 37 and password data 39 correspond to the received data.

When this list has been generated the user processing program 20 then despatches (S19) to a remote user device 1 from which a request has been received a review products interface for display selected from the user interface database 22 together with data extracted from item records having an identification number 58 corresponding to the initial order identification number in the generated list and product record of a product record database 30 having product identification numbers 70 corresponding to the product identification numbers 59 of the selected item record which are then utilised to generate a review offer interface for display on the remote user device 1 from which a request to review offers has been received.

Figure 11 is an exemplary illustration of a review offer interface displayed on a remote user device 1. The review offer interface corresponds substantially to the display offer interface of Figure 9 comprising at the top of the screen a picture 120 of a product and a description 122 of a product generated utilising the description data 71 of a product record extracted from the product database 30, beneath which appears a graph 124 substantially corresponding to the graph of the review offer interface. However, in this interface the graph contains a highlighted section 152 corresponding to the portion of the graph 124 which corresponds to the price which is associated with the range 82 within which the current total sold data 74 for the product currently lie, determined utilizing the total sold data 74 and order range data 82 for the current product.

Beneath the graph 124 is a normal price 154 corresponding to the recommended price data 72 for the product, a current price 156 corresponding to the price highlighted within the graph 124 and a saving 158 being a calculated difference between the normal price 154 and the current price 156. Beneath the saving 158 is a time left 159 being a calculated difference between the time and date indicated by the clock 12 and the end data 76 for the product record. At the bottom of the screen is a next button 160 and an end button 161 which may be selected utilising a pointer 162 displayed as part of the interface. When a user causes the pointer 162 to select either the next button 160 or the end button 161 this causes data to be despatched from the remote user device 1 to the server 3 via the Internet 5.

After a review offer interface has been despatched to a remote user device 1 the user processing program 20 waits until data indicating a selection by a user has been received. Initially the user processing program 20 causes the CPU 10 to determine (S20) whether data indicative of the selection of the end button has been received.

If the end button has been selected the processing of the user program ends. If the end button 161 has not been selected, the user processing program 20 then (S21) causes the CPU 10 to determine whether data received is indicative of the selection of the next button 160. If data received is not indicative of the selection of the next button, the user processing program 20 then waits receipt of further data to determine whether this further data is indicative of the selection of the end button 161 (S20).

When (S21) the CPU 10 determines that data received is indicative of the selection of the next button 160, the user processing program 20 causes the CPU 10 to generate and despatch to the remote user device 1 from which the data has been received a further review offer interface corresponding to the next product from the list of products previously generated to cause to be displayed on the remote user device 1 a description and price detail of the next product in the list. The user processing program 20 then awaits receipt of further data indicating the selection of either the next 160 or end 161 buttons on the newly-generated review product interface (S20-S21). Thus in this way a user is able to review all of the pending offers for which he has submitted an indication of interest in involvement in a bulk purchasing contract.

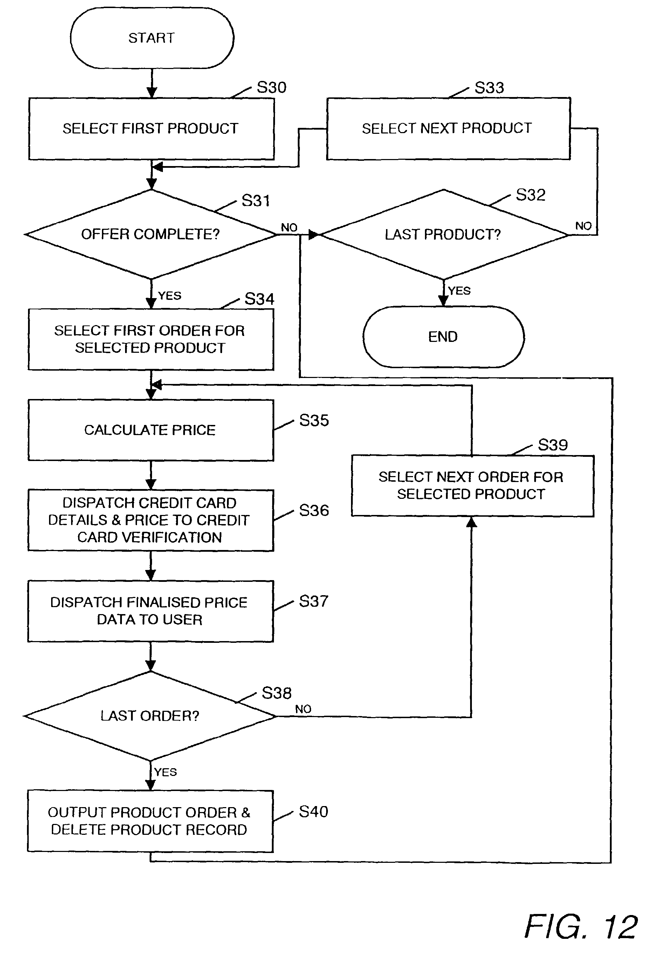

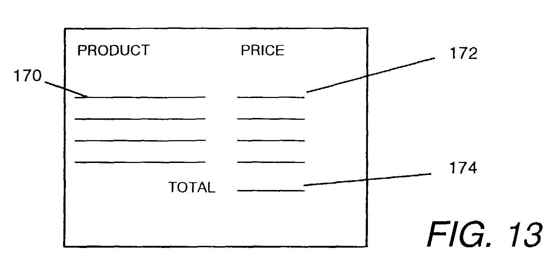

The processing of the administration module program 52 of this embodiment of the present invention will now be described with reference to Figures 12 and 13. The administration module program 52 is arranged to process received indications of commitment to enter a bulk purchase contract when offers corresponding to records within the product database 30 have ended either because they have reached the end of the time period for which they are intended to be available or because all of the available items within the bulk purchase contract have been subscribed to.

Figure 12 is a flow diagram of the processing of the administration module program 32 in accordance with this embodiment of the present invention. Periodically the administration module program 32 scans the content of the product database 30 to determine which, if any, records relate to completed offers. This is achieved by the administration module program 32 initially (S30) selecting the first product record within the product database 30. The administration module program 32 then determines whether the product record relates to a completed offer (S31) by comparing the total available data 73 with the total sold data 74 for the record and by comparing the end date data 76 with the current indicated time generated by the clock 12. If either the total available data 73 equals the total sold data 74 for a product record or the end date data 76 is determined to indicate a time earlier than the time indicated by the clock 12, this is indicative of the offer being complete.

If an offer is not determined to be completed, the administration module program 32 then (S32) causes the CPU 10 to determine whether the current selected record from the product database 30 corresponds to the last product record within the product database 30. If the current record is the final record within the product database 30, the processing of the administration module ends. If this is not the case, the administration module program 32 then (S33) selects the next product record within the product database 30 to determine whether that product record relates to a completed offer.

When the CPU 10 determines (S31) that a product record within the product record database 30 relates to a completed offer, the administration module program 32 then (S34) selects the first order within the order database 26 which has a product identification number 59 corresponding to the product identification number 70 for the presently-selected product. The administration module program 32 then calculates a price (S35) for the order by determining the item numbers 60 of item record within the item database 28 having order identification numbers 58 corresponding to the selected order and utilising the item numbers 60 of the selected item record to select from the price record 77 of the currently selected product record a price record element having a range 82 within which the item number 60 falls. A price for that item is then calculated by determining the range number 80 for the range 82 for which a total sold data 74 for the current selected product record falls and then selecting from the record element corresponding to the item number 60 a price corresponding to that range. A price for the entire order is then determined by calculating the sum of the calculated item prices.

When a price for an order has been calculated the credit card details 45 for the user record having a user record number 35 corresponding to the user record number 52 for the order are then despatched (S36) together with the calculated price data via the Internet 5 to the credit card verification system 7 to cause the credit card to be debited. The administration module program 32 then (S37) causes an email to be sent to the email address indicated by the email address data 37 of the user record having a user record number 35 corresponding to the user record number 52 of the order record detailing the product and final prices and total price for a completed order.

Figure 13 is an exemplary illustration of an email detailing products and final prices despatched to an email address associated with a user record. The email comprises a list 170 of products corresponding to the titles of products extracted from the description data 71 of product records having product identification number 70 corresponding to the product identification numbers 59 of the items within the item records associated with the current order each shown with a corresponding list of prices 172 being the calculated prices for each of those items and a total price 174 being the sum of all the prices in the list of prices 172. Thus in this way when an offer is completed the user who has submitted an indication that they wish to participate within a bulk purchase contract are informed of the final price at which a sale has been effected.

The administration module 32 then (S38) determines whether the current order is the last order within the order database 26. If the last order within the order database has not been reached, the administration module program 32 then (S39) selects the next order within the database corresponding to the currently selected product. If the administration module program 32 has reached the final order within the order database the administration module 32 then (S40) causes hard copies of all of the email despatched to the users to be printed together with a name data 41 and postal address data 43 for the orders so that products may then be despatched to the users and delete the product record from the product record database. The administration module program 32 then proceeds to determine (S32) whether the deleted product was the last product within the database and if this is not the case selects the next product (S33) for processing.

Although in the above embodiment description has been made of a computer network communicating via the Internet 5. The present invention is equally applicable to other computer networks where user devices are arranged to communicate with a central server by other means. Thus for example the remote user devices could comprise mobile phones employing a wireless applications protocol and the communications network could be a cellular network.

Although in the above described embodiment description has been made of outputting when an offer comes to an end a list of products together with postal addresses for later dispatch of products, the present invention is equally applicable to products which may be delivered on-line such as music or software. In the case of products which may be delivered on-line an administration module program 32 may be arranged to automatically output the products following a determination that a particular offer has ended.

Although the embodiments of the invention described with reference to the drawings comprise computer apparatus and processes performed in computer apparatus, the invention also extends to computer programs, particularly computer programs on or in a carrier, adapted for putting the invention into practice. The program may be in the form of source or object code or in any other form suitable for use in the implementation of the processes according to the invention. The carrier may be any entity or device capable of carrying the program.

For example, the carrier may comprise a storage medium, such as a ROM, for example a CD ROM or a semiconductor ROM, or a magnetic recording medium, for example a floppy disc or hard disk. Further, the carrier may be a transmissible carrier such as an electrical or optical signal which may be conveyed via electrical or optical cable or by radio or other means.

When a program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

## Claims

1. Computer apparatus for associating price data with indications of intent to participate within a purchasing scheme comprising:
interface generation means for generating user interface means adapted to enable the input of order data representative of indications of intent to participate within a purchasing scheme;
receiving means for receiving order data input via said user interface means;
association means for associating items of order data received by said receiving means with timing data indicative of the relative timings at which said items of order data were received; and
price generation means for associating with each of said items of order data, price data, said price data generation means being arranged to associate different price data with different items of order data, wherein the price data associated with an item of order data is selected utilizing a determination of the total number of items of order data received and said timing data associated with said items of order data.

2. Apparatus in accordance with claim 1, wherein said user interface generation means is arranged to generate a user interface for selecting a product from a plurality of products to enable the input of order data representative of an indication of intent to participate within a purchasing scheme for a selected product of said plurality of products, wherein said price data generation means is arranged to select price data utilizing a determined total number of items of order data received for a said product and said timing data associated with said items of order data for said product.

3. Apparatus in accordance with claim 1 or claim 2, wherein said price generation means comprises means arranged to store a plurality of items of price data for a product, each of said items of price data being associated with a range of one or more totals of received items of order data for a product and a range of one or more order numbers indicative of the relative timings at which a plurality of items of order data for a product are received, wherein said price data generation means is arranged to select said price data to be associated with items of order data utilizing said determined total number of items of order data and timing data associated with an item of order data to select price data from said data storage means.

4. Apparatus in accordance with claim 3, wherein said data storage means stores items of price data wherein the price data associated with a range of relative timings of receipt of order data is indicative of prices equal or lower in value as the total number of items of order data received increases.

5. Apparatus in accordance with claim 3 or claim 4, wherein said data storage means stores items of price data wherein the items of price data associated with earlier indications of the relative timings of receipt of order data are indicative of equal or lower prices than the price data for corresponding later received orders associated with the same total number of items of order data.

6. Apparatus in accordance with any preceding claim, wherein said interface generation means is adapted to enable the input of order data comprising data indicative of a financial guarantee for payment for participating within the purchasing scheme.

7. Apparatus in accordance with any preceding claim and further comprising means for storing data indicative of a total number of items of order data received for a product to date; wherein said interface generation means are arranged to generate a said interface means, further incorporating data indicating price data which will be associated with order data input via said user interface means, said price data being selected utilizing said price data generation means to select price data corresponding to timing data indicative of a newly received item of order data and said total number of items of order data received to date.

8. An apparatus in accordance with claim 7, wherein said interface generation means is arranged to generate a user interface for reviewing price data currently associated with previously input order data, said interface generation means being arranged to generate a user interface incorporating price data determined utilizing said price data generation means, wherein said price data associated with said previously input order data is selected utilizing said timing data associated with said order data and said data indicative of the total number of items of order data for a product received to date.

9. Apparatus in accordance with claim 7 or claim 8, wherein said interface generation means is arranged to incorporate said price data in the form a graphical display.

10. Apparatus in accordance with any preceding claim further comprising means for storing conditions for the ending of an offer to participate within a purchasing scheme and means for outputting price data associated with order data for an indication of intent to anticipate within a purchase scheme upon the determination of the condition for the ending of said scheme.

11. Apparatus in accordance with claim 10, wherein said conditions stored within said apparatus comprises a determination of the end of a time period for said scheme.

12. Apparatus in accordance with claim 10, wherein said condition comprises the detected receipt of a predetermined number of items of order data for a scheme.

13. A recording medium storing computer implementable processor steps for generating within a programmable computer an apparatus in accordance with any preceding claim.

14. A recording medium in accordance with claim 13 comprising a computer disc.

15. A computer disc in accordance with claim 14, wherein said computer disc comprises an optical, magneto-optical or magnetic disc.

16. A recording medium in accordance with claim 13, comprising an electric signal transferred via the Internet.

17. Apparatus for associating price data with data indicative of intent to participate within a bulk purchasing scheme comprising:
means for receiving data indicative of intent to participate within a bulk purchasing scheme; and
means for associating with received data, price data determined on the basis of the total number of items of data indicative of intent to participate and the relative timing of the receipt said data.

18. An apparatus for associating price data with indications of intent to participate within a purchasing scheme comprising:
means for receiving items of order data; and
means for associating with said items of order data price data selected on the basis of the total number of items of order data within a received sequence of order data and the relative position of an item within said sequence.
